# EUROPEAN PATENT APPLICATION

(11) **EP 2 544 074 A1**
(43) Date of publication of application: **09.01.2013**
(21) Application number: 11172693.1
(22) Date of filing: 05.07.2011
(51) Int. Cl.: G06F 3/033, G06F 3/039

(54) **Mouse warmer**

(71) Applicant: Shang Kwei Enterprise Co., Ltd., Shin-Juang New Taipei City (TW)
(72) Inventor: Hu, Yu-Hsiang, New Taipei City (TW); Chen, Chih-Cheng, New Taipei City (TW)
(74) Representative: Ruschke, Hans Edvard

(57) **Abstract**

A mouse warmer includes a mouse electrically connectable to a computer for cursor control and having a housing configured for the grasping of a hand of a user, and an electrical heater mounted in the housing for generating heat to warm the user's hand holding the housing.

## Description

### BACKGROUND OF THE INVENTION

### 1. Field of the Invention:

The present invention relates to a mouse design and more particularly, to a mouse warmer, which warms the user's hand that operates the mouse.

### 2. Description of the Related Art:

When using a computer, people usually use a mouse for cursor control. When compared to other input control devices, a mouse is more convenient for operation control.

When using a mouse, the user must hold the housing of the mouse with the hand. When operating the mouse of a computer in winter, the hand is exposed to the cold air and will become stiff and uncomfortable soon. Thus, when using a mouse to perform a drawing work on the screen of a computer or when operating the mouse of a computer under a cold weather condition for a long period, the hand may suffer from chilling injury.

### SUMMARY OF THE INVENTION

The present invention has been accomplished under the circumstances in view. It is one object of the present invention to provide a mouse warmer, which warms the user's hand that operates the mouse. It is another object of the present invention to provide a mouse warmer, which can be carried by a person conveniently for use as a body warmer.

To achieve these and other objects of the present invention, a mouse warmer includes a mouse electrically connectable to a computer for cursor control and having a housing configured for the grasping of a hand of a user, and an electrical heater mounted in the housing for generating heat to warm the user's hand holding the housing.

In one embodiment of the present invention, the electrical heater is detachably attached to the housing corresponding to the area to be grasped by a hand of a user.

In one embodiment of the present invention, the housing comprises at least one fastening member located on the top side thereof corresponding to the area to be grasped by a hand of a user, and the electrical heater comprises a body shell, at least one fastening member located on the bottom side there and detachably connectable to the at least one fastening member of the housing, and a sheet-like electrical heating element arranged at the top side of the body shell.

Further, the mouse comprises a plurality of metal spring plates arranged at the housing and electrically connected to a power circuit thereof. Further, the electrical heater further comprises a control circuit board mounted inside the body shell and electrically connected with the sheet-like electrical heating element for controlling the operation of the sheet-like electrical heating element, a rechargeable battery cell arranged at the control circuit board and chargeable by a charging circuit of the control circuit board, a plurality of electric contacts located on the bottom wall of the body shell and electrically connected to the control circuit board for electrically contacting the metal spring plates at the housing of the mouse for enabling the rechargeable battery cell to be electrically charged by the charging circuit of the control circuit board with the power supply of the mouse.

Further, the mouse comprises an electrical jack located on the front side of the housing, and a USB cable electrically and detachably connected to the electrical jack for electrically and selectively connecting the mouse to a USB port of a computer or an AC power adapter.

Further, the body shell of the electrical heater admits light. The electrical heater further comprises an indicator light installed in the control circuit board and controllable by the control circuit board to emit light through the body shell when the rechargeable battery cell is fully charged during a charging operation, a charge control switch for controlling the charging circuit to charge the rechargeable battery cell, and a temperature control switch arranged at the body shell for controlling the heating temperature of the sheet-like electrical heating element.

The electrical heater of the mouse warmer of the present invention can be detached from the mouse for use of a personal body warmer. For example, when going outside in a cold day, the user can carry the electrical heater to warm the body.

### BRIEF DESCRIPTION OF THE DRAWING

FIG. 1 is an exploded view of a mouse warmer in accordance with a first embodiment of the present invention.

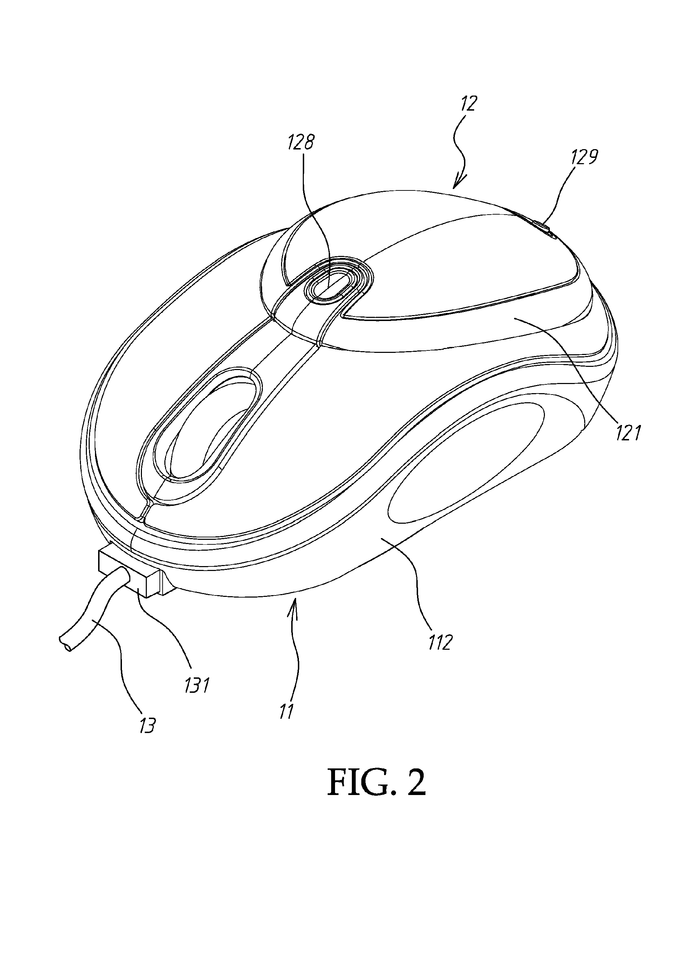

FIG. 2 is an elevational view of the mouse warmer in accordance with the first embodiment of the present invention.
FIG. 3 is a sectional view of the mouse warmer in accordance with the first embodiment of the present invention.
FIG. 4 is an elevational view of a mouse warmer in accordance with a second embodiment of the present invention.
FIG. 5 is a sectional view of the mouse warmer in accordance with the second embodiment of the present invention.

### DETAILED DESCRIPTION OF THE PREFERRED EMBODIMENT

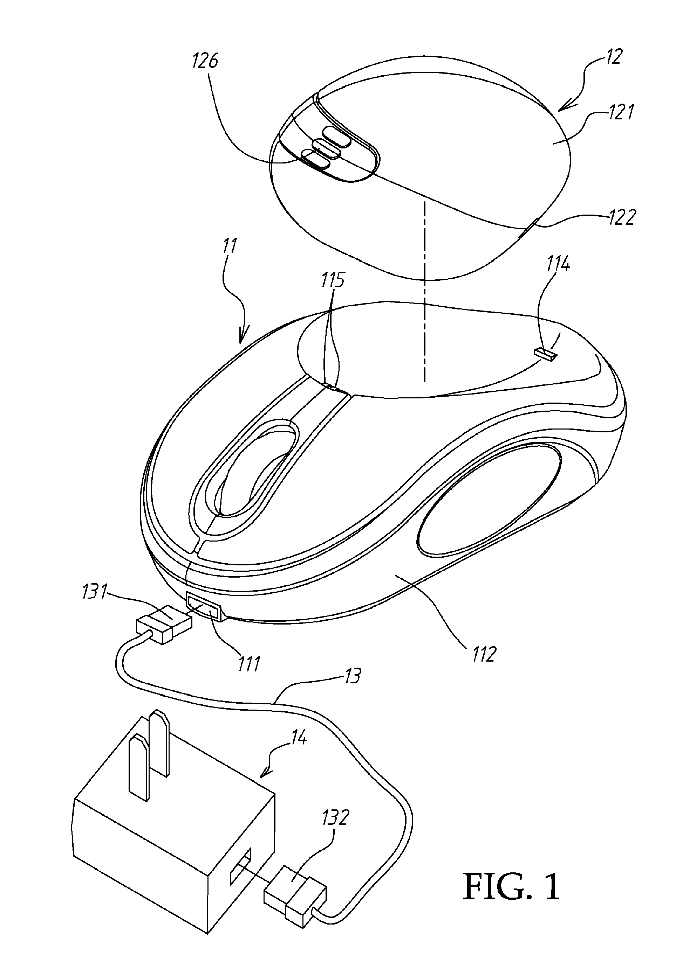

Referring to FIGS. 1∼3, a mouse warmer in accordance with a first embodiment of the present invention is shown comprising a mouse **11** and an electrical heater **12**. The electrical heater **12** is detachably attached to the mouse **11.**

The mouse **11** comprises an electrical jack **111** located on the front side of the housing **112** thereof for the connection of a USB cable **13**. The USB cable **13** has a first electrical connector **131** located on its one end and electrically connectable to the electrical jack **111**, and a second electrical connector, for example, USB connector **132** electrically connectable to a USB port of a computer (not shown) for signal transmission and power fetching, or an AC power adapter **14** for fetching city power supply. When connecting the USB connector **132** to a computer, the mouse **11** is electrically connected to the computer by the USB cable **13** for cursor control. The housing **112** of the mouse **11** is configured for comfortable hand grasping. The mouse **11** further comprises a circuit board mounted inside the housing **112** and carrying requisite optical components and buttons (not shown) for computer cursor control.

The electrical heater **12** comprises a body shell **121** detachably attached to the housing **112** of the mouse1. Preferably, the housing **112** has a part of the top wall thereof smoothly inwardly curved for accommodating the body shell **121** of the electrical heater **12**. Further, the body shell **121** has a female retaining member, for example, a retaining notch **122** located on the border area of the bottom wall thereof for engagement with a male retaining member, for example, a retaining rod **114** at the housing **112** to keep the body shell **121** in position.

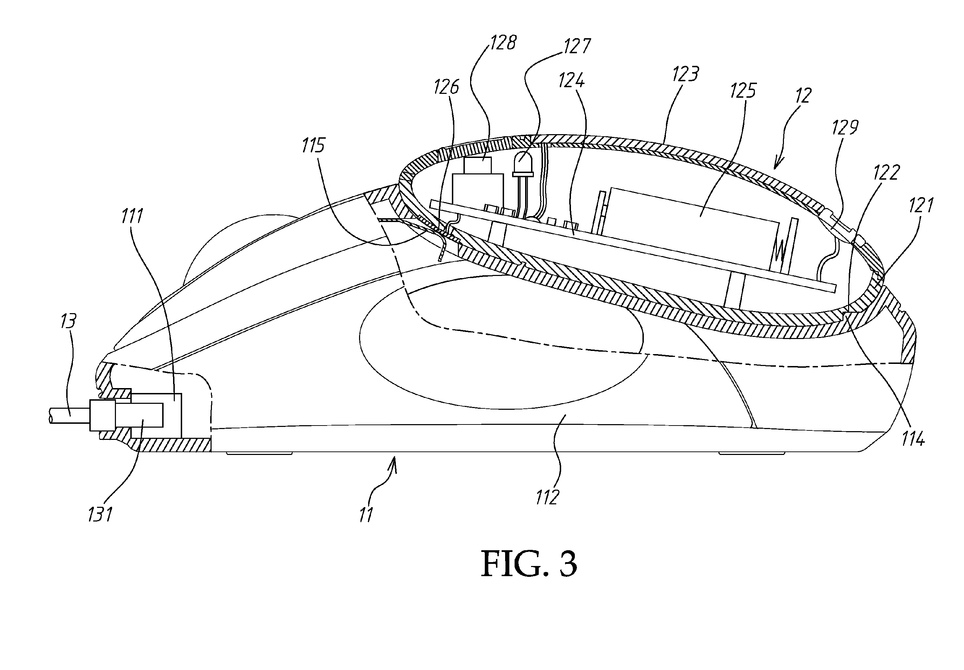

The electrical heater **12** further comprises a sheet-like electrical heating element **123** arranged at the top side of the body shell **121**, as shown in FIG. 3, a control circuit board **124** mounted inside the body shell **121**, a rechargeable battery cell **125** arranged at the control circuit board **124** inside the body shell **121**, a plurality of electric contacts **126** located on the bottom wall of the body shell **121** and electrically connected to the control circuit board **124** for electrically contacting respective metal spring plates **115** that are electrically connected to the power circuit of the housing **11** and arranged at the housing **112** for enabling the rechargeable battery cell **125** to be electrically charged by a charging circuit (not shown) of the control circuit board **124** with the power supply of the mouse **11**.

The electrical heater **12** further comprises an indicator light **127**, for example, LED light, electrically connected to the control circuit board **124**. Further, the body shell **121** admits light. When the rechargeable battery cell **125** is fully charged, the indicator light **127** is turned on to emit light through the body shell **121**. The electrical heater **12** further comprises a charge control switch **128** arranged at the top side of the body shell **121** at a selected location, preferably adjacent to the indicator light **127**, and operable to control charging of the rechargeable battery cell **125**, for example, operable to switch off the charging circuit of the control circuit board **124** when the indicator light **127** is turned on. The electrical heater **12** further comprises a temperature control switch **129** arranged at the top side of the body shell **121** for controlling the temperature of the sheet-like electrical heating element **123,** for example, 25°C, 45°C and OFF.

The electrical heater **12** of the mouse warmer of the present invention can be detached from the mouse **11** for use of a personal body warmer. For example, when going outside in a cold day, the user can carry the electrical heater **12** to warm the body.

As the USB connector **132** of the USB cable **13** of the mouse **11** can be selectively connected to a USB port of a computer for signal transmission and for fetching power supply to charge the rechargeable battery cell **125**, or an AC power adapter **14** to obtain city power supply for charging the rechargeable battery cell **125**, charging of the rechargeable battery cell **125** is convenient.

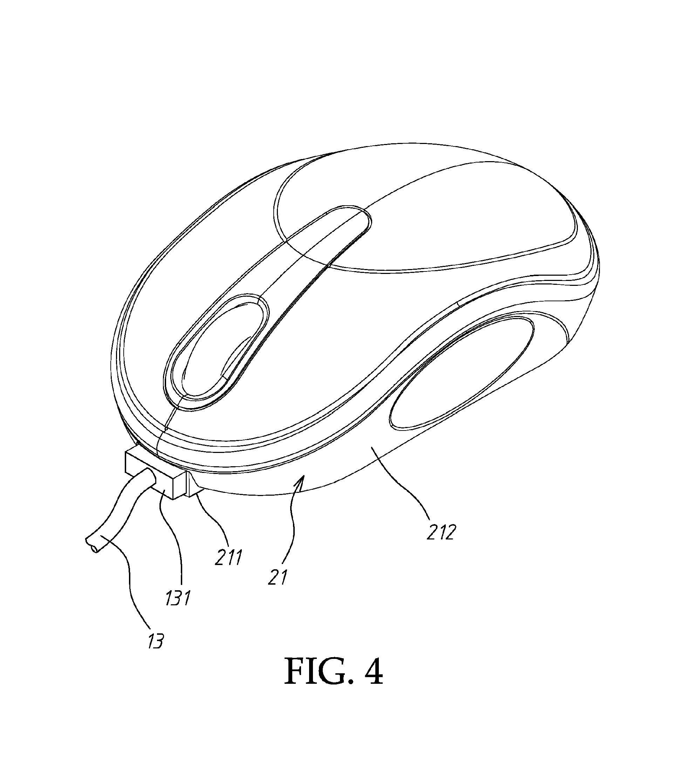

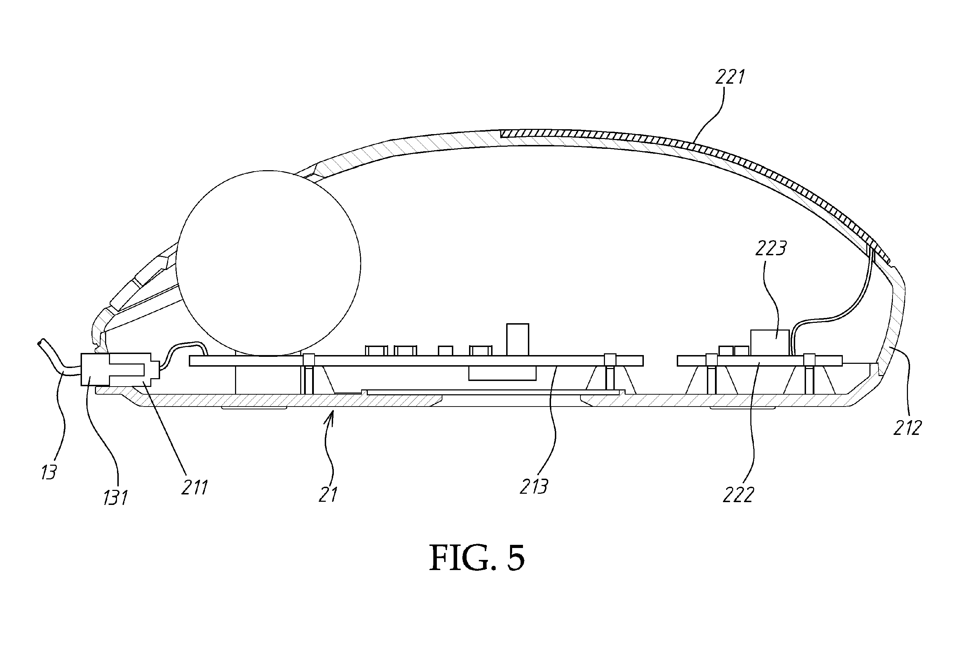

FIGS. 4 and 5 illustrate a mouse warmer in accordance with a second embodiment of the present invention. According to this second embodiment, the mouse warmer comprises a mouse **21** and an electrical heater fixedly installed in the mouse **21**.

Similar to the aforesaid first embodiment, the mouse **21** of this second embodiment comprises an electrical jack **211** located on the front side of the housing **212** thereof for the connection of an electrical connector **131** at one end of a USB cable **13**, a main circuit board **213** mounted inside the housing **212** and carrying requisite optical components and buttons (not shown) for computer cursor control, as shown in FIG. 5. The electrical heater comprises a sheet-like electrical heating element **221** arranged at the top side of the housing **212** for direct contact of the user's hand holding the mouse **21**, a control circuit board **222** mounted inside the housing **212** and electrically connected to the main circuit board **213**, and a rechargeable battery cell **125** arranged at the control circuit board **222**. Thus, the power supply obtained by the mouse **21** can be used to charge the rechargeable battery cell **223** subject to the control of a charging circuit of the control circuit board **222**. The sheet-like electrical heating element **221** is electrically connected to the control circuit board **222**, and controllable by the control circuit board **222** to generate heat.

In the aforesaid second embodiment of the present invention, the electrical heater is fixedly mounted in the housing **212** of the mouse **21** for generating heat to warm the user's hand holding the mouse **21**. If desired, the user can carry the mouse **21** without the USB cable **13** for body warming when going outside.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A mouse warmer, comprising:
a mouse electrically connectable to a computer for cursor control and having a housing for grasping by a hand of a user; and
an electrical heater mounted in said housing for generating heat to warm the user's hand holding said housing.

2. The mouse warmer as claimed in claim 1, wherein said electrical heater is detachably attached to said housing corresponding to the area to be grasped by a hand of a user.

3. The mouse warmer as claimed in claim 2, wherein said housing comprises at least one fastening member located on a top side thereof corresponding to the area to be grasped by a hand of a user; said electrical heater comprises a body shell, at least one fastening member located on a bottom side there and detachably connectable to the at least one fastening member of said housing, and a sheet-like electrical heating element arranged at a top side of said body shell.

4. The mouse warmer as claimed in claim 3, wherein said mouse comprises a plurality of metal spring plates arranged at said housing and electrically connected to a power circuit thereof; said electrical heater further comprises a control circuit board mounted inside said body shell and electrically connected with said sheet-like electrical heating element for controlling the operation of said sheet-like electrical heating element, a rechargeable battery cell arranged at said control circuit board and chargeable by a charging circuit of said control circuit board, a plurality of electric contacts located on a bottom wall of said body shell and electrically connected to said control circuit board for electrically contacting the metal spring plates at said housing of said mouse for enabling said rechargeable battery cell to be electrically charged by said charging circuit of said control circuit board with a power supply of said mouse.

5. The mouse warmer as claimed in claim 4, wherein said mouse further comprises an electrical jack located on a front side of said housing, and a USB cable electrically and detachably connected to said electrical jack for electrically and selectively connecting said mouse to a USB port of a computer or an AC power adapter.

6. The mouse warmer as claimed in claim 4, wherein said body shell of said electrical heater admits light; said electrical heater further comprises an indicator light installed in said control circuit board and controllable by said control circuit board to emit light through said body shell when said rechargeable battery cell is fully charged during a charging operation, and a charge control switch for controlling said charging circuit to charge said rechargeable battery cell.

7. The mouse warmer as claimed in claim 4, wherein said electrical heater further comprises a temperature control switch arranged at said body shell for controlling the heating temperature of said sheet-like electrical heating element.

8. The mouse warmer as claimed in claim 1, wherein said electrical heater comprises a sheet-like electrical heating element arranged at a top side of said housing, a control circuit board mounted inside said housing for controlling the operation of said sheet=like electrical heating element, and a rechargeable battery arranged at said control circuit board and chargeable by a charging circuit of said control circuit board with a power supply obtained from said mouse.

9. The mouse warmer as claimed in claim 8, wherein said mouse further comprises an electrical jack located on a front side of said housing, and a USB cable electrically and detachably connected to said electrical jack for electrically and selectively connecting said mouse to a USB port of a computer or an AC power adapter.
